Europäisches Patentamt

European Patent Office

Office européen des brevets

(11) Publication number: **0 320 938**
**A2**

## EUROPEAN PATENT APPLICATION

(21) Application number: **88121004.1**

(22) Date of filing: **15.12.88**

(51) Int. Cl.⁴: **F16K 7/00 , A61J 1/00**

(30) Priority: **16.12.87 JP 190066/87**

(43) Date of publication of application:
**21.06.89 Bulletin 89/25**

(84) Designated Contracting States:
**BE DE FR GB IT NL**

(71) Applicant: **KOKEN CO. LTD.**
**5-18 Shimoochiai 3-chome**
**Shinjuku-ku Tokyo(JP)**

(72) Inventor: **Satoh, Akira**
**1-47, Katyushinmachi**
**Turuoka-shi Yamagata-Ken(JP)**
Inventor: **Wada, Fumio**
**279-2, Hie-ebishima**
**Turuoka-shi Yamagata-Ken(JP)**

(74) Representative: **Kraus, Walter, Dr. et al**
**Patentanwälte Kraus, Weisert & Partner**
**Thomas-Wimmer-Ring 15**
**D-8000 München 22(DE)**

(54) **A valve.**

(57) This invention is concerned with a valve comprising a main body provided with a flange, and a tubular elastic sheath covering the main body, wherein one end of the main body is open so as to provide there a hole, and the other is closed, the flange is attached to on the open end of the main body so that the valve can be glued to a bag to contain/containing solution, and the main body is separatable into two parts along a longitudinal split thereof.

EP 0 320 938 A2

## A Valve

### Field of the Invention

This invention relates to a valve for putting in or taking out solution from a bag with ease. More specifically, it relates to a valve adapted to attach to a bag so that for instance, a medical solution may be put in or taken out with ease therethrough.

### Description of the Prior Art

Hitherto, in order to put in or take out a medical solution from a bag, it was necessary to provide a bag a nipple made of elastic material to thrust an injection needle into, or to cut part of a bag in such a way as to connect a pipe thereto. Notwithstanding, an elastic nipple tends to leak through many times of thrusts with injection needles and a pipe tends to give such interstice between a bag and itself that the leakage of solution cannot be avoided.

### Summary of the Invention

Accordingly, it is an object of this invention to provide a valve simply attachable to a bag so as to put in or take out solution therefrom very easily. That is, this invention is concerned with a valve comprising a main body provided with a flange, and a tubular elastic sheath covering the main body, wherein one end of the main body is open so as to provide there a hole, and the other is closed, the flange is attached to on the open end of the main body so that the valve can be glued to a bag to contain/containing solution, and the main body is separable into two parts along a longitudinal split thereof. Such is the structure of the valve of this invention that it is desirable to give the inside of the hole of the main body corrugations in order to facilitate the insertion of a tube into the hole.

### Brief Description of the Drawings

Fig. 1 is a cross-sectional view of a valve according to this invention;

Fig. 2 is an illustration showing a valve of this invention is provided to the inside of a bag; and

Fig. 3 is an illustration showing a tube is inserted into a valve of this invention provided to the inside of a bag.

### Detailed Description of Preferred Embodiment of this invention

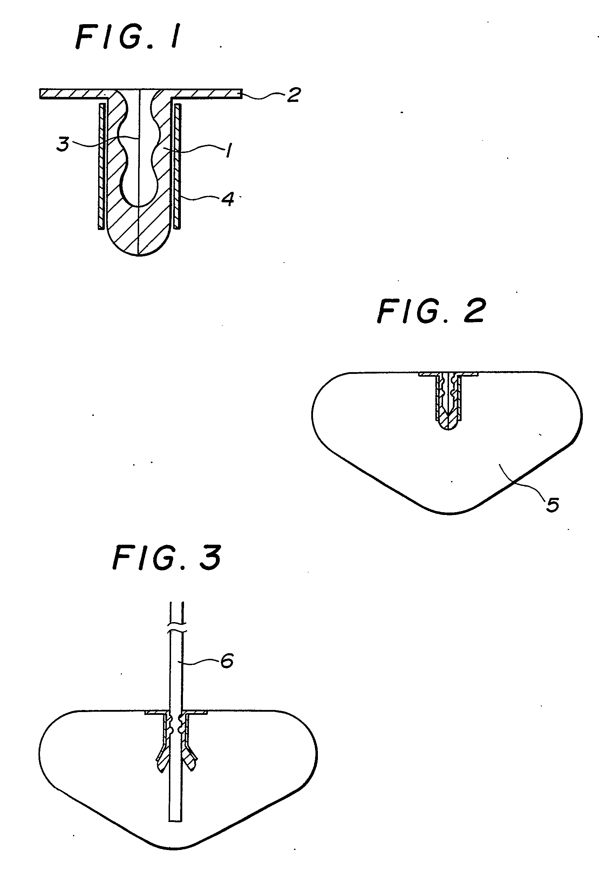

As shown in Fig. 1, a valve of this invention is constructed of a main body 1, a flange 2, and a tubular elastic sheath 4. The main body 1 is designed to separate into two parts along split 3 longitudinally; the tubular elastic sheath 4 is designed to tightly hold the separatable main body 1; and the valve is designed to attach to a bag with the help of the flange 3.

In the meantime, when solution in the bag 5 is taken out or solution is put in the bag 5, a tube 6 provided with a hard pipe is inserted into the valve. Thereby, the split 3 of the main body 1 is widened in such a way as to hold the tube 6, as shown in Fig. 3. When the tube 6 is withdrawn from the main body 1, the split 3 of the main body 1 is closed in such a way by the compression of the tubular rubbery elastic sheath 4, as shown in Fig. 2, that solution in the bag 5 does not leak therefrom.

Also, according to this invention, corrugations can be provided to the inside of the hole of the main body 1, by which frictional resistance between the tube 6 and the inside of the hole of the main body 1 is lessened so greatly as to receive the tube freely.

The main body 1 can be made out of silicon rubber, polyurethane rubber or any other elastic materials including thermoplastic elastomer. Moreover, the tubular elastic sheath 4 can be made out of any elastic materials more flexible than or as flexible as the material usable for the main body; that is, they include soft silicon rubber, fluoride rubber, natural rubber, synthetic rubber, thermoplastic elastomer and the like.

As stated so far, despite the fact that the valve of this invention has a very simple structure, putting in or taking out solution from a bag can be made so readily that the valve of this invention can be used for a valve of tissue expander bags, balloon catheters, murmury bags and the like. Therefore, the effect of this invention is indeed very great.

### Claims

(1) A valve comprising a main body provided with a flange, and a tubular elastic sheath covering the main body, wherein one end of said main body is open so as to provide there a hole, and the other is closed, said flange is attached to on the open end of said main body so that said nozzle can be glued to a bag to contain/containing solution, and said main body is separatable into two parts along a longitudinal split thereof.

(2) A valve according to claim 1, of which the inside of said hole of said main body is corrugated.

*FIG. 1*

*FIG. 2*

*FIG. 3*